# EUROPÄISCHE PATENTSCHRIFT

(11) **EP 2 200 858 B1**
(45) Veröffentlichungstag und Bekanntmachung des Hinweises auf die Patenterteilung: **29.05.2013**
(21) Anmeldenummer: 08773584.1
(22) Anmeldetag: 13.06.2008
(51) Int. Cl.: B60K 37/06, B60K 35/00

(54) **FAHRZEUGSYSTEM MIT HILFEFUNKTIONALITÄT**
VEHICLE SYSTEM COMPRISING AN ASSISTANCE FUNCTIONALITY
SYSTEME DE VEHICULE A FONCTION D'ASSISTANCE

(30) Priorität: 12.09.2007 DE 102007043935
(43) Veröffentlichungstag der Anmeldung: 30.06.2010
(73) Patentinhaber: Volkswagen Aktiengesellschaft, 38440 Wolfsburg (DE)
(72) Erfinder: BERGHOLZ, Ralf, 38108 Braunschweig (DE); DAGINNUS, Michael, 38106 Braunschweig (DE); SCHWAB, Gabriel, 38440 Wolfsburg (DE); WU, Yongmei, 38108 Braunschweig (DE); WÄLLER, Christoph, 38102 Braunschweig (DE); BENDEWALD, Lennart, 38442 Wolfsburg (DE); BOHNENBERGER, Thorsten, 38122 Braunschweig (DE); LEMKE, Katja, 38124 Braunschweig (DE); ROX, Karl, 38446 Wolfsburg (DE); SCHULZ, Stefan, 13189 Berlin (DE); LILIENTHAL, Jörg, 38518 Gifhorn (DE)
(74) Vertreter: Obst, Bernhard
(86) Internationale Anmeldenummer: PCT/EP2008/005043
(87) Internationale Veröffentlichungsnummer: WO 2009/036823

(56) Entgegenhaltungen:
- EP-A- 0 675 018
- EP-A- 1 031 456
- EP-A- 1 749 688
- WO-A-2007/054284
- DE-A1- 10 220 797

## Beschreibung

Die Erfindung betrifft ein Fahrzeugsystem eines Kraftfahrzeugs mit den Merkmale des Oberbegriffs des Patentanspruchs 1 sowie ein Verfahren mit den Merkmalen des Oberbegriffs des Patentanspruchs 9.

Fahrzeugsysteme in modernen Kraftfahrzeugen stellen eine Vielzahl von Funktionalitäten und Funktionen bereit. Dementsprechend sind die Fahrzeugsysteme ebenso wie ihre Bedlenung komplexer geworden. Fahrzeugnavigationssysteme, Infotainmentsysteme und/oder Multifunktionssysteme, die beispielsweise ein Fahrzeugnavigationssystem und ein Infotainmentsystem umfassen, sind für einen Nutzer ohne erläuternde Informationen in der Regel nicht mehr bedienbar. Die notwendigen Erklärungsinformationen sind im Stand der Technik in gedruckten Bedienungsanleitungen enthalten, die einem Kraftfahrzeug zugefügt werden. Die Bereitschaft von Nutzem, diese Bedienungsanleitungen zu lesen, ist jedoch gering. Darüber hinaus lassen sich Bedienungsabläufe, die eine Vielzahl von unterschiedlichen Bedienschritten erfordern, in einer gedruckten Bedienungsanleitung nur schwierig darstellen.

Neuere Überlegungen haben dazu geführt, eine Bedienungsanleitung in elektronischer Form zu speichern. Beispielsweise ist aus der DE 100 06 351 A1 eine Vorrichtung zum Abrufen von Informationen zur Funktion und Bedienung verschiedener Einrichtungen eines Kraftfahrzeugs beschrieben, wobei das Kraftfahrzeug mit mindestens einem Fahrzeugbus ausgestattet ist, an den verschiedene Komponenten der Fahrzeugelektronik angeschlossen sind. Die Vorrichtung umfasst eine Informationsbasis, in der Informationen zur Funktion und Bedienung verschiedener Einrichtungen des Kraftfahrzeugs abgespeichert sind, einen an die Informationsbasis angeschlossenen Mikrorechner, Eingabemittel zum Abrufen von Informationen von der Informationsbasis und Ausgabemittel zur Wiedergabe der abgerufenen Informationen. Für die beschriebene Vorrichtung ist ausgeführt, dass der Mikrorechner an den Fahrzeugbus angeschlossen und so programmiert ist, dass der Informationsbedarf des Benutzers durch Auswerten der von den einzelnen Komponenten der Fahrzeugelektronik an den Fahrzeugbus gelieferten Daten ermittelt wird und entsprechende Informationen automatisch von der Informationsbasis abgerufen und wiedergegeben werden. Beispielsweise werden in Fehlersituationen Hinweise zu einer möglichen Pannenbehebung gegeben. Mit dem System kann der Nutzer sich zwar im Kraftfahrzeug die elektronisch gespeicherten Erklärungsinformationen ausgeben lassen und erhält in einlgen Fehlersituationen Hinweise, wie die Fehlersituation zu beseitigen ist. Jedoch wird ein Erlernen der Bedienung nicht optimal unterstützt.

Aus der EP 1 749 688 A2 ist ein Informationssystem für ein Kraftfahrzeug bekannt, welches eine Datenverarbeitungsvorrichtung und eine Anzeigeeinrichtung zur Darstellung von gespeicherten Informationen umfasst, die mittels einer Bedieneinrichtung auswählbar und aus einer Speichereinrichtung auslesbar sind. Zur Erhöhung des Nutzerkomforts des Kraftfahrzeugs handelt es sich bei den Informationen um solche einer Bedienungsanleitung und bei Auswahl einer Information ist die entsprechende Einrichtung im Kraftfahrzeug aktivierbar.

Aus der EP 0 675 018 A1 (beinhaltet auch die Merkmale des Oberbegriffs der Ansprüche 1 und 9) ist eine Informationsvorrichtung für bedienbare Geräte in einem Kraftfahrzeug mit einem Bildschirm und einer Auswahleinrichtung für verschiedene Betriebsarten bekannt, die eine Betriebsart "Bedienerinformation" aufweist, bei der den Geräten individuell zugeordnete Bedienelemente bei ihrer Betätigung eine Steuervorrichtung für einen Speicher ansteuern. Die Steuervorrichtung entnimmt dabei aus dem Speicher den Bedienelementen zugeordnete Daten und bringt sie zur Anzeige auf dem Bildschirm. Aus der EP 1 031 456 A2 sind ein Verfahren und eine Vorrichtung zur Unterstützung eines Benutzers eines Kraftfahrzeugs bei der Bedienung von Fahrzeugkomponenten bekannt. Hierbei werden Betriebszustände der Komponenten abhängig von der Betätigung von Betätigungselementen der Komponenten geschaltet, wobei im Unterstützungsabfrageelement vorgesehen ist, abhängig von dessen Betätigung zu der nachfolgenden Betätigung eines Betätigungselements wenigstens einer Komponente lediglich eine Information über den mit diesen Betätigungselementen im Normalbetrieb schaltbaren Betriebszustand auszugeben.

Der Erfindung liegt somit die technische Aufgabe zugrunde, ein Fahrzeugsystem zu schaffen, welches ein Erlernen einer Bedienung und/oder ein Ausführen einer Bedienung für eine Person, die das Fahrzeugsystem noch nicht oder nicht vollständig kennt, besser unterstützt wird.

Die technische Aufgabe wird durch ein Fahrzeugsystem mit den Merkmalen des Patentanspruchs 1 sowie eine Vorrichtung mit den Merkmalen des Patentanspruchs 9 gelöst. Vorteilhafte Ausgestaltungen der Erfindung ergeben sich aus den Unteransprüchen.

Die Lösung der technischen Aufgabe basiert auf der Grundidee, dass eine Steuereinrichtung des Fahrzeugsystems mit einer Speichereinrichtung, die vorzugsweise in das Fahrzeugsystem integriert ist, verknüpft ist, auf dem die Erklärungsinformationen, die die Funktionalitäten des Fahrzeugsystems und dessen Bedienung beschreiben, abgelegt sind. Die Steuereinrichtung ist ferner mit einer Schnittstelle gekoppelt, über die Steuerungseingaben des Nutzers erfasst und Informationen ausgegeben werden können. Das Fahrzeugsystem ist in einem Assistenzmodus betreibbar, in dem die Steuerungseingaben, über die die Funktionalitäten des Fahrzeugsystems gesteuert werden, von der Steuereinrichtung (zusätzlich) ausgewertet werden, um Erklärungsinformationen aus dem Speichermedium abzurufen und über die Schnittstelle auszugeben, welche die jeweils aktivierte Funktionalität und/oder weitere aktuelle Bedienmöglichkeiten erläutern. Hierdurch wird es für den Nutzer möglich, während der Bedienung des Fahrzeugsystems über Steuerungseingaben jeweils die zu der aktuellen ausgelösten Funktionalität zugeordneten Erklärungsinformationen ausgegeben zu erhalten und/oder die notwendigen Bedienungsanleitungen zu erhalten, die die weiteren möglichen Bedienschritte für den Nutzer erläutern. Insbesondere wird ein Fahrzeugsystem eines Kraftfahrzeugs, welches gesteuert durch Steuerungseingaben Funktionalitäten in dem Kraftfahrzeug bereitstellt, vorgeschlagen, weiches eine Schnittstelle zum Erfassen der Steuerungseingaben und Ausgeben von Informationen und eine Steuereinrichtung zum Steuern der Funktionalitäten In Abhängigkeit der erfassten Steuerungseingaben umfasst. Bei dem Fahrzeugsystem ist die Steuereinrichtung mit einem Speichermedium verknüpft, auf dem Erklärungsinformationen abgespeichert sind, die die Funktionalitäten und/oder Bedienung erläutern, wobei die Steuereinrichtung ausgebildet ist, Erklärungsinformationen aus dem Speichermedium abzurufen und über die Schnittstelle als Teil der Informationen auszugeben, wobei das Fahrzeugsystem in einem Assistenzmodus betreibbar ist, in dem die Nutzereingaben als Steuereingaben für die Funktionalität aufgefasst und ausgewertet werden, und zusätzlich zeitgleich Erklärungsinformationen ausgegeben werden, die die jeweilige aktivierte Funktionalität und/oder weitere Bedienmöglichkeiten erläutern. Elnem Nutzer wird somit die Möglichkeit gegeben, den Erläuterungen, die ihm über die Erklärungsinformationen zugänglich gemacht werden, sofort auszuführen und so insbesondere mehrstufige Bedienvorgänge assistiert durch die Erklärungsinformationen des Fahrzeugsystems auszuführen, während ihm die einzelnen Bedienschritte über die Erklärungsinformationen erläutert werden.

Erfindungsgemäß ist vorgesehen, dass das Fahrzeugsystem in einem Anleitungsmodus betreibbar ist, in dem über erfasste Steuerungseingaben eine gewünschte Funktionalität mit mehrstufigem Bedienvorgang auswählbar ist, die der Nutzer auslesen und/oder bedienen möchte, und nach der Auswahl der gewünschten Funktionalität automatisch in den Assistenzmodus gewechselt wird, wobei von der Steuereinrichtung nur Erklärungsinformationen ausgegeben werden, die den Nutzer anleiten, die gewünschte Funktionalität auszulösen und/oder zu bedienen, und gegebenenfalls zusätzlich die gewünschte Funktionalität beschreiben. Bel dieser Ausführungsform wählt der Nutzer zunächst eine Funktionalität aus, die er bedienen möchte. Anschließend wechselt das Fahrzeugsystem in den Assistenzmodus, wobei jedoch nur noch die Ertäuterungsinformationen ausgegeben werden, die ihn anleiten, die gewünschte Funktionalität auszulösen und/oder zu bedienen. Erklärungsinformationen, die andere mögliche Optionen bei dem mehrstufigen Bedienvorgang betreffen würden, werden somit nicht ausgegeben. Diese Ausführungsform ermöglicht es, dem Nutzer zielgerichtet assistiert eine Funktion auszulösen und/oder zu bedienen: Selbst Nutzer, die eine Vielzahl von Funktionen eines Fahrzeugsystems bedienen können, sind häufig nicht In der Lage, sämlliche Funktionen fehlerfrei zu bedienen. Somit können auch solche Nutzer selten genutzte Funktionen, deren Bedienung ihnen nicht geläufig ist, über den Anleitungsmodus und den automatischen Wechsel in den Assistenzmodus mit Unterstützung ausführen und erlernen.

Als vorteilhaft für einen Lemerfolg hat es sich herausgestellt, wenn der Nutzer auf eine vorgenommene Bedienhandlung, die als Steuerungseingabe erfasst wird, eine Rückmeldung erhält, ob er die vorgesehene Bedienhandlung korrekt ausgeführt hat oder nicht. Zumindest bei nicht korrekt ausgeführten Bedienhandlungen ist eine Rückmeldung erforderlich, um dem Nutzer eine Korrektur zu ermöglichen. Daher sieht eine bevorzugte Ausführungsform der Erfindung vor, dass die Steuereinrichtung ein Vergleichsmodul umfasst, mit dem die Steuerungseingaben bei einem durch den Anleitungsmodus ausgelösten Assistenzmodus mit den vorgesehenen Steuerungseingaben zum Auslösen und/oder Bedienen der Das Fahrzeugsystem ist so ausgestaltet, dass es im Assistenzmodus, auch wenn dieser durch den Anleitungsmodus ausgelöst wurde, alle Nutzereingaben als Steuerungseingaben erfasst und auswertet, wie er dies in einem reinen Bedienmodus täte, in dem die Nutzereingaben lediglich als Steuerungseingaben erfasst werden. Hierdurch wird erreicht, dass der Nutzer schnell auf veränderte Situationen reagieren kann oder sich während einer mehrstufigen Bedienung zum Auslösen einer Funktionalität umentscheiden kann und eine andere Funktionalität auslösen kann, ohne dass hierfür eine weitere Eingabe notwendig ist. Bei einer anderen Ausführungsform kann vorgesehen sein, dass Steuerungseingaben, welche von den vorgesehenen Steuerungseingaben abweichen, wenn das Fahrzeugsystem im Assistenzmodus betrieben wird, der aus dem Anleitungsmodus aufgerufen wurde, nicht als Steuerungseingaben für das Fahrzeugsystem zum Auslösen von Funktionalitäten angesehen werden. Bei einer solchen Ausführungsform ist es im Assistenzmodus, der aus dem Auswahlmodus aufgerufen ist, nur möglich, die gewünschte Funktionalität auszulösen und/oder zu bedienen. Ungewünschte Fehlbedienungen, die irrtümlich vorgenommen werden, lösen somit keine Funktionen des Fahrzeugsystems aus.

Um dem erfahrenen Nutzer eine Bedienung zu ermöglichen, bei der ihm keine Erklärungsinformationen während der Bedienung des Fahrzeugsystems ausgegeben werden, ist bei einer bevorzugten Ausführungsform vorgesehen, dass das Fahrzeugsystem in einem Bedienmodus betreibbar ist, in dem Steuerungseingaben nur als Steuerungseingaben für das Fahrzeugsystem aufgefasst und ausgewertet werden und keine zusätzlichen Erklärungsinformationen ausgegeben werden.

In anderen Situationen ist es wünschenswert, sich über Funktionalitäten des Fahrzeugsystems informieren zu lassen, ohne zugleich das Fahrzeugsystem hinsichtlich der von ihm bereitgestellten Funktionalitäten zu bedienen. Somit ist es bevorzugt, dass das Fahrzeugsystem in einem Erklärungsmodus betreibbar ist, in dem die Steuerungseingaben nur als Steuerungseingaben zum Abrufen von Erklärungsinformationen aufgefasst und ausgewertet werden.

Bei Ausführungsformen, bei denen das Fahrzeugsystem in unterschiedlichen Betriebsmodi betreibbar ist, ist es vorteilhaft, wenn der Nutzer wählen kann, in welchen Betriebsmodus das Fahrzeugsystem bei einer Inbetriebnahme wechseln soll. Besonders bevorzugt umfasst das Fahrzeugsystem daher eine Konfigurationseinheit, über die einer der Betriebsmodi festlegbar ist, in den das Fahrzeugsystem nach einer Inbetriebnahme wechselt.

Bei einer bevorzugten Ausführungsform ist vorgesehen, dass bei einem erstmaligen Wechsel nach der Inbetriebnahme in den Anleitungsmodus und/oder den Assistenzmodus und/oder den Erklärungsmodus automatisch Erklärungsinformationen ausgegeben werden, die das Ausgeben von Erklärungsinformationen und dessen Steuerung durch die Steuerungseingaben erläutert wird. Dies bedeutet, dass die unterschiedlichen Betriebsmodi, in denen es vorgesehen ist, dass Erklärungsinformationen ausgegeben werden, zumindest bei einem erstmaligen Wechsel in diesem Betriebsmodus nach einer Inbetriebnahme des Fahrzeugsystems erläutert werden. Somit ist sichergestellt, dass der unerfahrene Nutzer jeweils die notwendigen Informationen erhält, wie die Betriebsmodi zu nutzen sind, in denen ihm Erklärungsinformationen angeboten werden.

Das Fahrzeugsystem ist bevorzugt so ausgebildet, dass die Schnittstelle Bedienelemente zum Erfassen der Steuerungseingaben umfasst oder mit diesen gekoppelt ist. Ebenso ist es vorteilhaft, wenn die Schnittstelle mindestens eine Ausgabeeinrichtung umfasst oder mit dieser gekoppelt ist.

In einer besonders bevorzugten Ausführungsform ist die Schnittstelle mit einer Multifunktionsanzeige- und Bedienvorrichtung gekoppelt oder als solche ausgestaltet. Als besonders vorteilhaft hat sich eine Ausführungsform herausgestellt, bei der das Fahrzeugsystem in eine Multifunktionsanzeige- und Bedienvorrichtung integriert ist. Über diese ist sowohl eine Erfassung der Steuerungsangaben als auch eine Ausgabe der Erklärungsinformationen auf einfache Weise möglich. Eine besonders leicht zu erfassende Ausgabe der Erklärungsinformationen wird möglich, wenn die Multifunktionsanzeige- und Bedienvorrichtung eine Anzeigevorrichtung mit einer freiprogrammierbaren Anzeigefläche umfasst. Hierdurch wird es möglich, eine Vielzahl von grafischen Darstellungen an derselben Stelle auf der Anzeigefläche zu unterschiedlichen Zeitpunkten darzustellen. Ebenso ist es mit einer freiprogrammierbaren Anzeigefläche möglich, die Erklärungsinformationen animiert und/oder in Form von Filmsequenzen auszugeben.

Eine Verwendung einer als Touchscreen ausgebildeten Anzeige- und Bedienvorrichtung hat sich als Besonders günstig zum Ausgeben von Informationen und Erfassen von Steuerungseingaben erwiesen. Die Erklärungsinformationen können eine Darstellung der virtuellen Bedienelemente beeinflussen. Beispielsweise können die Bedienelemente grafisch hervorgehoben werden, während die Funktionalitäten erläutert werden, die über sie ausgelöst werden können. Ein unterstütztes Anleiten zum Auslösen einer Funktionalität kann hierdurch besonders effektiv ausgeführt werden.

Als besonders vorteilhaft hat es sich erwiesen, wenn mindestens eine Ausgabeeinrichtung ein Audiosystem umfasst. Hierüber ist es möglich, Audioinformationen auszugeben. Insbesondere bei Fahrzeugsystemen, die einen Touchscreen als Schnittstelle bzw. integriertes Bedienelement und Ausgabevorrichtung zum Erfassen von Steuerungsangaben des Nutzers und Ausgeben von Informationen an den Nutzer umfasst, ist es vorteilhaft, wenn zusätzlich eine Ausgabevorrichtung vorhanden ist, die als Audiosystem ausgebildet ist. Bei solchen Systemen ist es nämlich häufig schwierig, die Erklärungsinformationen auf der Anzeigefläche des Touchscreens auszugeben und zugleich die virtuellen Bedienelemente anzuzeigen und/oder die Informationen anzuzeigen, die das Fahrzeugsystem im Zuge der Bereitstellung seiner Funktionalitäten anzeigt und/oder zur Bedienung des Fahrzeugsystems notwendig sind. Bei einer bevorzugten Ausführungsform ist somit vorgesehen, dass das Ausgaben der Erklärungsinformationen im Assistenzmodus nur über ein Audiosystem erfolgt. Bei anderen Ausführungsformen und/oder bei anderen Betriebsmodi ist es vorteilhaft, wenn die Schnittstelle mehrere unterschiedlich modale Ausgabeeinrichtungen umfasst oder mit unterschiedlich modalen Ausgabeeinrichtungen gekoppelt ist, so dass die Erklärungsinformationen multimodal, beispielsweise optisch und akustisch, ausgegeben werden können.

Als besonders intuitiv für den Nutzer hat es sich erwiesen, die Erklärungsinformationen so auszubilden, eine künstlich animierte Person (Avatar) bei der Ausgabe der Erklärungsinformationen darzustellen. Eine solche Person kann die Erklärungsinformationen besonders günstig unterstützen, da menschliche Nutzer an Gestiken des Menschen besonders gut gewöhnt sind, die während Erklärungsprozessen von natürlichen Personen genutzt werden. Diese Gestiken kann die künstliche Person ebenfalls verwenden und hierdurch eine Erklärung besonders einfach und intuitiv unterstützen. Selbst bei Fahrzeugsystemen, die einen Touchscreen umfassen, kann der Avatar beispielsweise als transparente Figur eingesetzt werden und so eine Ausgabe der Erklärungsinformationen, insbesondere eine Ausgabe von multimodal ausgegebenen Erklärungsinformationen unterstützen.

Die Merkmale des erfindungsgemäßen Verfahrens weisen dieselben Vorteile wie die entsprechenden Merkmale der erfindungsgemäßen Vorrichtung auf.

Nachfolgend wird die Erfindung anhand bevorzugter Ausführungsbeispiele unter Bezugnahme auf eine Zeichnung näher erläutert. Hierbei zeigen:
- Fig. 1: eine schematische Ansicht eines Kraftfahrzeugs mit einer Ausführungsform eines Fahrzeugsystems, mit dem eine Bedienung während ihrer Ausführung erlernbar ist;
- Fig. 2: eine schematische Darstellung eines weiteren Kraftfahrzeugs mit einer weiteren Ausführungsform eines Fahrzeugsystems, mit dem eine Bedienung während ihrer Ausführung erlernbar ist;
- Fig. 3: eine schematische Ansicht eines Ablaufdiagramms eines Verfahrens zum Betreiben eines Fahrzeugsystems zum Erlernen der Bedienung während der Benutzung des Fahrzeugsystems;
- Fig. 4: eine Ansicht einer als Touchscreen ausgebildeten Anzeigefläche, auf der ein Bedienmenü einer Fahrzeugnavigationsfunktionalität dargestellt ist, deren Bedienung durch eine künstliche Person unterstützt wird;
- Fig. 5: eine schematische Ansicht einer Anzeigefläche, auf der Erklärungsinformationen ausgegeben werden, die eine Bedienung einer Funktionalität des Fahrzeugsystems unterstützen;
- Fig. 6: eine schematische Darstellung eines als Multifunktionsanzeige- und Bediengerät ausgebildeten Fahrzeugsystems, bei der eine künstliche Person durch Zuwendung eines Rückens zu dem Nutzer eine Inaktivität eines Erklärungsinformation bereitstellenden Modus anzeigt; und
- Fig. 7: eine Ansicht eines Fahrzeugsystems nach Fig. 6, bei dem die künstliche Person aktiv ist, um eine Funktionalität des Fahrzeugsystems unterstützend zu erläutern.

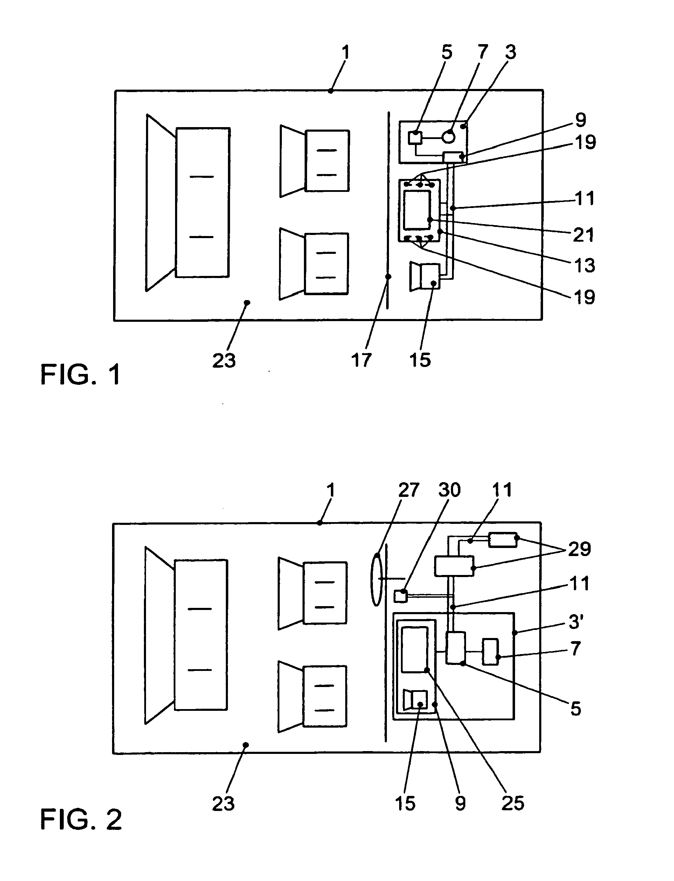

In Fig. 1 ist schematisch ein Kraftfahrzeug 1 dargestellt. Dieses umfasst mindestens ein Fahrzeugsystem 3. Das Fahrzeugsystem 3 stellt eine oder mehrere Funktionalitäten für das Kraftfahrzeug 1 bereit, beispielsweise Fahrzeugnavigationsfunktionalitäten. Die Fahrzeugnavigationsfunktionalitäten können beispielsweise eine zielgeführte Navigation des Kraftfahrzeugs umfassen, bei der Fahrtrichtungshinweise an den Fahrer ausgegeben werden. Befolgt der Fahrer diese Fahrtrichtungshinweise, so wird er zu einem zuvor festgelegten Zielpunkt mit dem Kraftfahrzeug geführt. Das Fahrzeugsystem kann selbstverständlich andere und/oder weitere Funktionalitäten bereitstellen.

Das Fahrzeugsystem 3 umfasst eine Steuereinrichtung 5, welche die einzelnen Funktionalitäten des Fahrzeugsystems 3 steuert. Mit der Steuereinrichtung 5 ist ein Speichermedium 7 verknüpft, auf dem Erklärungsinformationen abgelegt sind. Die Erklärungsinformationen umfassen Informationen zur Erläuterung der Funktionalitäten des Fahrzeugsystems und/oder dessen Bedienung. Die Erklärungsinformationen können Audiodaten und/oder Videodaten, Daten für Grafiken, für animierte Grafiken, für Text usw. umfassen. Das Fahrzeugsystem 3 umfasst ferner eine Schnittstelle 9, über die das Fahrzeugsystem, beispielsweise über einen Fahrzeugdatenbus 11, mit einer Multifunktionsanzeige- und Bedieneinrichtung 13 sowie einem Audiosystem 15 verbunden ist. Wesentlich ist, dass die Steuereinrichtung neben dem Bereitstellen der Erklärungsinformationen auch die Funktionalität der Fahrzeugsystems steuert.

Die Schnittstelle 9 kann bei anderen Ausführungsformen so ausgeführt sein, dass sie Bedienelemente zum Erfassen von Steuerungseingaben des Nutzers und/oder mindestens eine Ausgabeeinrichtung, beispielsweise eine Anzeigevorrichtung, ein Audiowiedergabesystem, eine Spracherkennungseinheit usw., umfassen.

Die Multifunktionsanzeige- und Bedienvorrichtung 13 ist vorzugsweise in eine Konsole 17 oder ein Armaturenbrett des Kraftfahrzeugs 1 integriert. Um Steuerungseingaben des Nutzers erfassen zu können, umfasst die Multifunktionsanzeige- und Bedienvorrichtung 13 Bedienelemente 19. Zum Ausgeben von Informationen umfasst die Multifunktionsanzeige- und Bedienvorrichtung 13 vorzugsweise eine Anzeigevorrichtung 21, die eine freiprogrammierbare Anzeigefläche, beispielsweise ein LCD-Display, welches farbig ausgestaltet sein kann, ein Plasmabildschirm oder ähnliches ist. Bei anderen Ausführungsformen kann die Anzeigevorrichtung auch eine Projektionsanzeigevorrichtung sein, bei der eine grafische Darstellung auf eine Anzeigefläche projiziert wird.

Ein in einem Innenraum 23 des Kraftfahrzeugs 1 befindlicher Nutzer (nicht dargestellt) kann die Bedienelemente 19 betätigen und hierüber Steuerungseingaben für das Fahrzeugsystem 3 vornehmen. Dieses stellt daraufhin seine Funktionalitäten zur Verfügung. Ist das Fahrzeugsystem 3 beispielsweise ein Fahrzeugnavigationssystem, so gibt es beispielsweise einen Ausschnitt aus einer Landkarte wieder, der die Umgebung der aktuellen Kraftfahrzeugposition darstellt, sowie gegebenenfalls Fahrtrichtungshinweisinformationen, beispielsweise in Form von Pfeildarstellungen in dem Kartenausschnitt, die eine zielgeführte Navigation des Kraftfahrzeugs 1 in seiner Umgebung unterstützen.

Bei einer bevorzugten Ausführungsform ist die Multifunktionsanzeige- und Bedienvorrichtung 13 mit einer als Touchscreen ausgebildeten Anzeigevorrichtung 21 versehen, die neben dem Ausgeben von Informationen eine Berührung und eine Berührposition eines Betätigungselements, beispielsweise eines Fingers, des Nutzers erfassen kann. Über eine Logik der als Touchscreen ausgebildeten Anzeigevorrichtung kann der Berührposition abhängig von den auf der Anzeigefläche dargestellten Informationen ein Steuerbefehl zugeordnet werden. In einem Assistenzmodus bewirken Steuerungseingaben, dass ihm die in dem Fahrzeugsystem 3 in dem Speichermedium 7 gespeicherten Erklärungsinformationen ausgegeben werden, die die über die Steuerungseingabe ausgelöste Funktionalitätsbeschreibungen und/oder weitere Bedienoptionen erläutern.

Umfasst das Kraftfahrzeug mehrere Fahrzeugsysteme (nicht dargestellt), so können diese gemeinsam die Multifunktionsanzeige- und Bedienvorrichtung nutzen.

Fig. 2 zeigt schematisch ebenfalls ein Kraftfahrzeug 1. Gleiche technische Merkmale sind in allen Figuren mit demselben Bezugszeichen versehen. Das Kraftfahrzeug 1 umfasst ein Fahrzeugsystem 3', welches unterschiedliche Funktionalitäten bereitstellt. Das Fahrzeugsystem 3' umfasst eine Steuereinrichtung 5 sowie ein Speichermedium 7, welches beispielsweise als Festplatte, Flashspeicher, Speicherkarte oder DVD usw. ausgebildet sein kann. Eine Schnittstelle 9 zum Erfassen von Steuerungseingaben und Ausgeben von Informationen umfasst bei dieser Ausführungsform eine als Touchscreen ausgebildete Anzeige- und Bedienvorrichtung 25 sowie ein Audiosystem 15. Bei anderen Ausführungsformen kann die Schnittstelle weitere Eingabe- und/oder Ausgabemittel umfassen, beispielsweise eine Spracherkennungseinheit und/oder Bedienelemente, die in ein Fahrzeuglenkrad 27 integriert sind, sowie haptische Ausgabemittel, die beispielsweise eine Vibration von am Fahrzeuglenkrad 27 angeordneten Elementen bewirken. Die Steuereinheit 5 wertet Steuerungseingaben, die über die Schnittstelle 9 erfasst werden, aus und erstellt Steuerungsbefehle, um entsprechende Funktionalitäten des Fahrzeugsystems 3 bereitzustellen. Ist das Fahrzeugsystem 3 beispielsweise als Fahrzeugnavigations- und Infotainmentsystem ausgebildet, so wird über die Steuereinrichtung 5 beispielsweise eine Ausgabe von Audiosignalen über das Audiosystem 15 der Schnittstelle 9 als Folge von Betätigungshandlungen des Nutzers ausgelöst. Das Fahrzeugsystem 5 ist so ausgestaltet, dass es über Steuerungseingaben (beispielsweise Nutzereingaben) in einen Assistenzmodus versetzbar ist. In diesem werden die Steuerungseingaben zusätzlich so ausgewertet, dass aus dem Speichermedium 7 Erklärungsinformationen abgerufen und über die Schnittstelle 9, beispielsweise die als Touchscreen ausgebildete Anzeige- und Bedienvorrichtung 25 und/oder das Audiosystem 15, ausgegeben werden, wobei die Erklärungsinformationen die durch die Steuerungseingabe ausgelöste Funktionalität oder weitere Bedienoptionen erläutern. Die vorgenommenen Betätigungshandlungen, welche als Steuerungseingaben erfasst werden, werden somit sowohl als Steuerungseingaben zum Bereitstellen der Funktionalitäten des Fahrzeugsystems 3' ausgewertet und aufgefasst als auch zusätzlich dahingehend ausgewertet, dass Erklärungsinformationen aus dem Speichermedium 7 abgerufen und ausgegeben werden, die die entsprechend aktivierte Funktionalität beschreiben und/oder weitere Bedienoptionen und Möglichkeiten beschreiben und erläutern. Zum Bereitstellen der Funktionalitäten kann es notwendig sein, zu den weiteren Fahrzeugsystemen 29 über einen Fahrzeugdatenbus 11 Informationen auszutauschen. Das Fahrzeugsystem 3' kann für diese weiteren Fahrzeugsysteme 29 als Benutzerschnittstelle dienen. Zusätzlich kann das Fahrzeugsystem 3' mit einer Nutzererkennungsvorrichtung 30 über den Fahrzeugdatenbus 11 gekoppelt sein, die Informationen darüber bereitstellt, welcher der Nutzer eine Betätigungshandlung der Anzeige- und Bedienvorrichtung 25 vornimmt. Dem Fachmann sind unterschiedliche Ausführungsformen solcher Nutzererkennungsvorrichtungen 30 bekannt. Diese können beispielsweise kapazitiv über den Fahrer und Beifahrer übertragene unterschiedliche Hochfrequenzsignale kapazitiv empfangen und hinsichtlich der unterschiedlichen Signale auswerten und so den Fahrer und den Beifahrer identifizieren. Die über den Fahrer und Beifahrer übertragenen Hochfrequenzsignale werden vorzugsweise mittels an oder in den Fahrzeugsitzen angeordneten Hochfrequenzsendem kapazitiv in den Fahrer und/oder Beifahrer eingekoppelt. Andere Systeme zur Nutzererkennung nutzen andere Techniken, die beispielsweise Bahnkurven der bewegten Betätigungselemente, insbesondere der Hände, der Nutzer auswerten und den einzelnen Nutzern zuordnen.

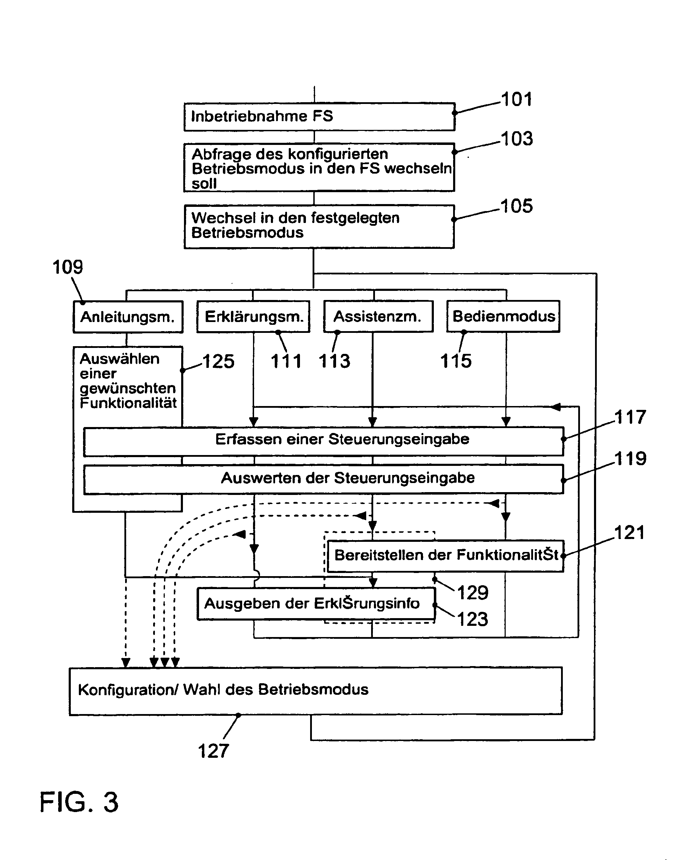

In Fig. 3 ist schematisch ein Ablaufdiagramm eines Verfahrens zum Betreiben eines Fahrzeugsystems eines Kraftfahrzeugs dargestellt. Zunächst wird das Fahrzeugsystem (FS) in Betrieb genommen 101. Anschließend wird der Betriebsmodus festgestellt, in den das Fahrzeugsystem wechseln soll 103. Anschließend erfolgt der Wechsel in den festgelegten Betriebsmodus 105. Bei der dargestellten Ausführungsform ist das Fahrzeugsystem in einem Anleitungsmodus 109, in einem Erklärungsmodus 111, in einem Assistenzmodus 113 und in einem Bedienmodus 115 betreibbar. Die Darstellung in Fig. 3 ist so gewählt, dass jedem Betriebsmodus eine Spalte zugeordnet ist. Verfahrensschritte, die sich über mehrere Spalten erstrecken, treten in den Betriebsmodi auf, über dessen Spalten sie sich erstrecken.

Wird das Fahrzeugsystem beispielsweise im Bedienmodus 115 betrieben, wird zunächst eine Steuerungseingabe erfasst 117 und anschließend die Steuerungseingabe ausgewertet 119. Entsprechend der Auswertung wird die entsprechende Funktionalität des Fahrzeugsystems bereitgestellt 121. Anschließend wird mit dem Erfassen einer weiteren Steuerungseingabe 117 fortgefahren.

Wird das Fahrzeugsystem hingegen in dem Assistenzmodus 113 betrieben, so wird als Ergebnis der Auswertung der Steuerungseingabe 119 zusätzlich zu dem Bereitstellen der Funktionalität 121 eine Erklärungsinformation aus dem Speichermedium abgerufen und ausgegeben 123, die die aktivierte Funktionalität beschreibt und/oder weitere Bedienoptionen und/oder Möglichkeiten erläutert. Die Zeitgleichheit des Bereitstellens der Funktionalität 121 und des Ausgebens der Erklärungsinformationen ist durch einen gestichelte Kasten 129 angedeutet. Anschließend wird auch im Assistenzmodus eine weitere Steuerungseingabe erfasst 117.

Wird das Fahrzeugsystem im Erklärungsmodus 111 betrieben, so entfällt das Bereitstellen der Funktionalität. In diesem Modus werden die Steuerungseingaben nur ausgewertet, um Erklärungsinformationen auszugeben 123.

Wird das Fahrzeugsystem im Anleitungsmodus 109 betrieben, so wird zunächst eine gewünschte Funktionalität ausgewählt, die der Nutzer assistiert bedienen möchte 125. Ist die gewünschte Funktionalität ausgewählt, wechselt das Fahrzeugsystem aus dem Anleitungsmodus 109 in den Assistenzmodus 113, wobei zunächst Erklärungsinformationen abgerufen und ausgegeben werden 123, und jeweils in dem Assistenzmodus nur die Erklärungsinformationen ausgegeben werden, die die jeweils aktuelle aktivierte Funktionalität und/oder die Bedienoptionen ausgibt, die zum Bedienen der gewünschten Funktionalität auszuführen sind. Hierbei kann es vorgesehen sein, dass dem Nutzer zusätzlich Rückmeldungen (beispielsweise akustisch) ausgegeben werden. Ein Erfassen der Steuereingaben 117 und Auswerten der Steuerungseingaben 119 kann selbstverständlich auch dazu führen, dass ein anderer Betriebsmodus ausgewählt oder das Fahrzeugsystem dahingehend konfiguriert wird, in welchem Betriebsmodus das Fahrzeugsystem nach der Inbetriebnahme wechseln soll 127.

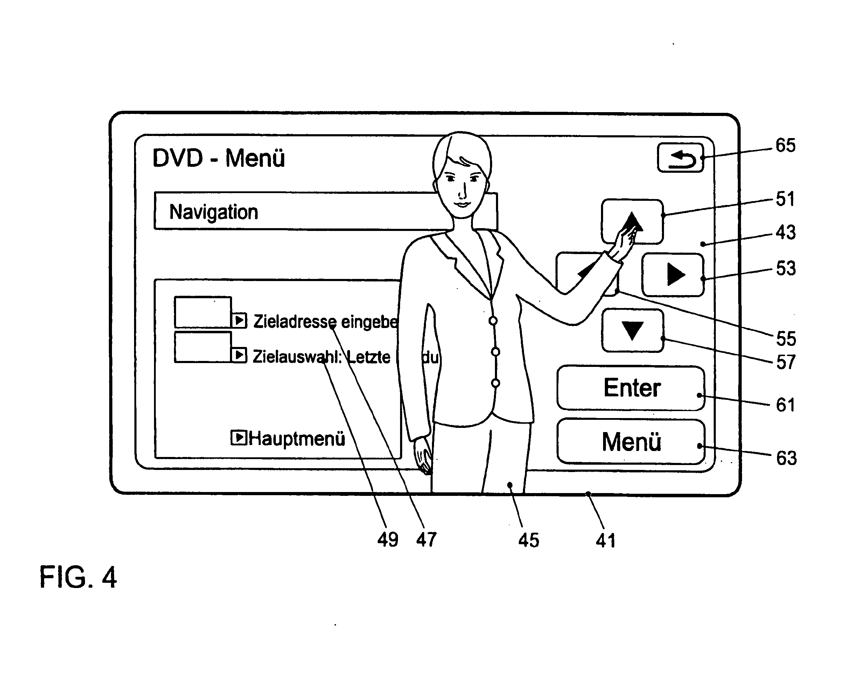

In Fig. 4 ist eine Ansicht 41 einer als Touchscreen ausgebildeten Anzeigefläche 43 dargestellt. Die Ansicht 41 zeigt eine Darstellung, bei der das Fahrzeugsystem im Assistenzmodus betrieben ist. Eine künstliche Person 45, die auch als Avartar bezeichnet wird, erläutert Bedienmöglichkeiten, die einem Nutzer zur Verfügung stehen, um in dem auf der Anzeigefläche 43 dargestellten Bedienmenü einer Fahrzeugnavigation eines der Untermenüs 47, 49 auszuwählen. Um diese auszuwählen, sind auf der Anzeigefläche 43 virtuelle Bedienelemente 51-65 dargestellt. Über eine Berührung dieser virtuellen Bedienelemente 51-65 kann eine Steuerungseingabe durch den Nutzer vorgenommen werden. Die künstliche Person 45 erläutert die Auswirkungen, die ein Betätigen der einzelnen virtuellen Bedienelemente 51-65 nach sich zieht. Die künstliche Person 45 ist somit als animierte Grafik einer Ansicht der Anzeigefläche 43 überlagert, die sich im Bedienmodus ergebe, in dem keine Erklärungsinformationen ausgegeben werden. Durch Gesten und beispielsweise ein grafisches Hervorheben eines einzelnen und/oder mehrerer der virtuellen Bedienelemente 51-65 sowie ein zeitgleiches Ausgeben von akustischen Erklärungsinformationen werden die einzelnen Bedienoptionen erläutert. In der Ansicht 41 erläutert die künstliche Person 45 die Auswirkungen, die ein Betätigen des Bedienelements 51 bewirkt, welches grafisch hervorgehoben ist und auf den die künstliche Person 45 durch eine Geste hinweist.

Eine identische Ansicht zu der nach Fig. 4 ergibt sich auch im Assistenzmodus, der durch den Anleitungsmodus automatisch ausgelöst ist. In diesem Fall wird die künstliche Person 45 lediglich auf das Bedienelement, beispielsweise das Bedienelement 51, hinweisen, welches zu betätigen ist, um die ausgewählte gewünschte Funktionalität auszulösen und/oder zu bedienen.

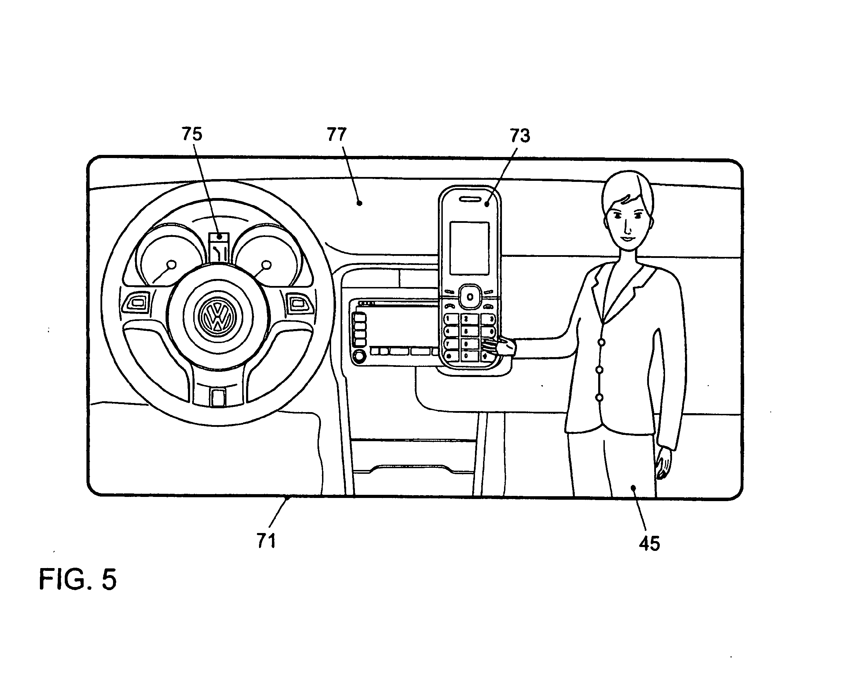

In Fig. 5 ist eine weitere Ansicht 71 einer Anzeigefläche einer Anzeigevorrichtung dargestellt, auf der Erklärungsinformationen ausgegeben werden, die einem Nutzer eine Bedienung eines Fahrzeugsystems erläutern. Dargestellt ist eine Situation, in der die künstliche Person 45 Erklärungen gibt, wie ein Mobiltelefon 73 mit einem Fahrzeugsystem eines Kraftfahrzeugs gekoppelt werden kann. Eine erstmalige Kopplung des Mobiltelefons 73, welches eine Bluetooth-Schnittstelle umfasst, mit dem Fahrzeugsystem erfordert einmalig eine Ausführung von bestimmten Bedienschritten. Die künstliche Person 45 weist zunächst auf eine Anzeigefläche 75 im Cockpit 77 und anschließend auf das Mobiltelefon 73, während zeitgleich folgende Erläuterung über ein Audiosystem ausgegeben wird: "So koppeln Sie Ihr Mobiltelefon mit dem Fahrzeugsystem. Schalten sie die Zündung und danach das Mobiltelefon ein". Anschließend werden während des Kopplungsprozesses die durch den Nutzer vorgenommenen Handlungen und hierüber bewirkten Steuerungseingaben ausgewertet und jeweils die entsprechenden Erklärungsinformationen unterstützt durch die künstliche Person 45 ausgegeben, um dem Nutzer die einzelnen Schritte während des Kopplungsprozesses zu erläutern. Auch hierbei können Rückmeldungen an den Nutzer ausgegeben werden, ob die vorgenommenen Handlungen korrekt ausgeführt wurden oder einer Korrektur bedürfen, um das Mobiltelefon 73 korrekt mit dem Fahrzeugsystem zu koppeln.

Bei anderen Ausführungsformen kann vorgesehen sein, dass die Erklärungsinformationen im Assistenzmodus, insbesondere wenn dieser durch den Anleitungsmodus ausgelöst ist, lediglich akustisch ausgegeben werden. Dieses bietet sich insbesondere dann an, wenn das Fahrzeugsystem über eine als Touchscreen ausgebildete Anzeige- und Bedienvorrichtung bedient wird und eine Vielzahl von Informationen und/oder virtuellen Bedienelementen auf der Anzeigefläche dargestellt ist, so dass zusätzliche Erklärungsinformationen nicht darstellbar sind.

Es hat sich herausgestellt, dass ein Nutzer die Informationen besonders leicht erfassen kann, die durch die Erklärungsinformationen ausgegeben werden, wenn von ihm die künstliche Person, die mit den Erklärungsinformationen ausgegeben wird, als sympathisch empfunden wird. Daher ist bei einigen Ausführungsformen vorgesehen, dass eine Gestalt der künstlichen Person Nutzerabhängig ausgewählt werden kann. Die Erklärungsinformationen sind dann so ausgestaltet, dass die konkrete Ausgestaltung der grafisch dargestellten Informationen und/oder der akustisch ausgegebenen Informationen abhängig von dieser Festlegung erfolgt. Beispielsweise können männliche Nutzer eine Erläuterung durch eine männliche künstliche Person und Frauen eine Erläuterung durch eine weibliche künstliche Person bevorzugen.

Insbesondere wenn ein Spracherkennungssystem zur Erfassung von Steuerungseingaben verwendet wird, ist es vorteilhaft, wenn die künstliche Person einen natürlichen Namen trägt. Auch hier ist es wiederum für eine Akzeptanz des Systems von Vorteil, wenn der Nutzer den Namen der Person selbst festlegen kann. Eine Aktivierung der Erklärungsinformationen kann dann über ein Rufen des Namens, d.h. ein Aussprechen des Namens, zusammen mit einem Aufforderungssatz zum Auslösen einer Ausgabe der Erklärungsfunktionen verwendet werden. Die Ausgabe von Erktärungsinformationen kann durch einen Nutzer beispielsweise durch ein Aussprechen des folgenden Satzes aktiviert werden: "Klaus, hilf mir bitte", wenn der Nutzer der künstlichen Person den Namen Klaus gegeben hat. Es ergibt sich, dass der künstlichen Person nahezu jeder Name durch den Nutzer zugeordnet werden kann.

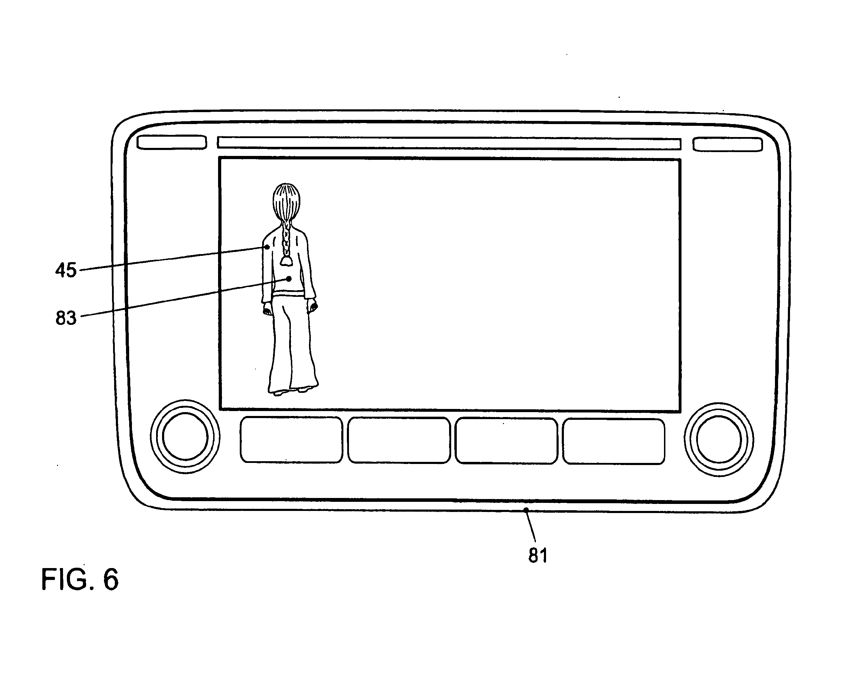

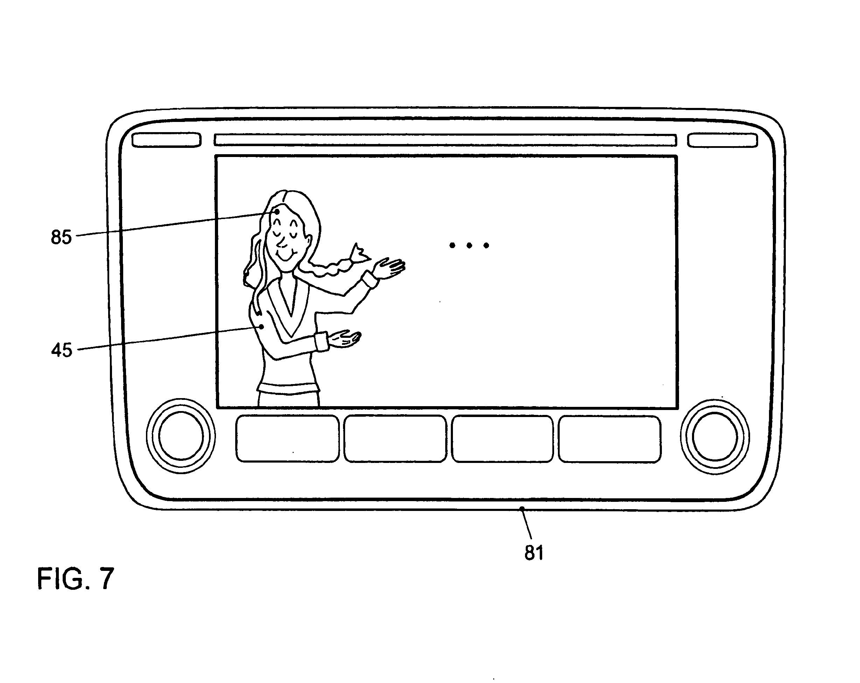

Um dem Nutzer anzudeuten, ob die künstliche Person aktiv oder inaktiv ist, ist bei einigen Ausführungsformen vorgesehen, dass die künstliche Person in einer von dem Nutzer abgewandten Stellung auf der Anzeigefläche dargestellt wird, wenn diese inaktiv ist. Dieses ist beispielsweise in Fig. 6 schematisch dargestellt, in der die Ansicht einer Multifunktionsanzeige- und Bedienvorrichtung 81 schematisch dargestellt ist. Die künstliche Person 45 hat dem Nutzer ihren Rücken 83 zugewandt. Ist hingegen die künstliche Person 45 aktiv, so wendet sie dem Nutzer ihr Gesicht 85 zu. Dieses ist beispielsweise in Fig. 7 dargestellt. Es ergibt sich für den Fachmann, dass eine Inaktivität der künstlichen Person und somit eine Inaktivität einer Ausgabe und/oder Steuerung von Erklärungsinformationen auch dadurch angedeutet werden kann, dass die künstliche Person stark verkleinert und/oder seitlich abgewandt dargestellt ist. Bei einer vergrößerten und/oder zugewandten Darstellung wird dem Nutzer hingegen signalisiert, dass eine Ausgabe und/oder Steuerung von Erklärungsinformationen aktiv ist.

Die dargestellten Ausführungsformen sind lediglich beispielhaft und sollen nicht beschränkend ausgelegt werden.

### Bezugszeichenliste

| | |
|---|---|
| 1 | Kraftfahrzeug |
| 3 | Kraftfahrzeugsystem |
| 5 | Steuereinrichtung |
| 7 | Speichermedium |
| 9 | Schnittstelle |
| 11 | Fahrzeugdatenbus |
| 13 | Multifunktionsanzeige- und Bedienvorrichtung |
| 15 | Audiosystem |
| 17 | Konsole |
| 19 | Bedienelement |
| 21 | Anzeigevorrichtung |
| 23 | Innenraum |
| 25 | Anzeige- und Bedienvorrichtung |
| 27 | Fahrzeuglenkrad |
| 29 | weitere Fahrzeugsysteme |
| 30 | Nutzererkennungseinheit |
| 41 | Ansicht einer Anzeigefläche |
| 43 | Anzeigefläche |
| 45 | künstliche Person |
| 47-49 | Untermenüs |
| 51-65 | virtuelle Bedienelemente |
| 71 | Ansicht einer Anzeige- und Bedienvorrichtung |
| 73 | Mobiltelefon |
| 75 | Anzeigefläche |
| 77 | Cockpit |
| 81 | Ansicht einer Multifunktionsanzeige- und Bedienvorrichtung |
| 83 | Rücken |
| 85 | Gesicht |
| 101 | Inbetriebnahme Fahrzeugsystem |
| 103 | Abfrage des konfigurierten Betriebsmodus, in den das Fahrzeugsystem wechseln soll |
| 105 | Wechsel in den festgelegten Betriebsmodus |
| 109 | Anleitungsmodus |
| 111 | Erklärungsmodus |
| 113 | Assistenzmodus |
| 115 | Bedienmodus |
| 117 | Erfassen einer Steuerungseingabe |
| 119 | Auswerten der Steuerungseingabe |
| 121 | Bereitstellen der Funktionalität |
| 123 | Ausgeben der Erklärungsinformation |
| 125 | Auswählen einer gewünschten Funktionalität |
| 127 | Konfiguration/Wahl des Betriebsmodus |
| 129 | Kasten |

## Patentansprüche

1. Fahrzeugsystem (3, 3') für ein Kraftfahrzeug (1), welches gesteuert durch Steuerungseingaben Funktionalitäten in dem Kraftfahrzeug (1) bereitstellt, umfassend eine Schnittstelle (9) zum Erfassen der Steuerungseingaben und Ausgeben von Informationen und eine Steuereinrichtung (5) zum Steuern der Funktionalitäten in Abhängigkeit der erfassten Steuerungseingaben,
wobei
mit der Steuereinrichtung (5) ein Speichermedium (7) verknüpft ist, auf dem Erklärungsinformationen abgespeichert sind, die die Funktionalitäten und/oder Bedienung erläutern, wobei die Steuereinrichtung (5) ausgebildet ist, Erklärungsinformationen aus dem Speichermedium (7) abzurufen und über die Schnittstelle (9) als Teil der informationen auszugeben, wobei das Fahrzeugsystem (3. 3') in einem Ausistenzmodus betreibbar ist, in dem die Nutzereingaben als Steuerungseingaben für die Funktionalitäten aufgefasst und ausgewertet werden und zusätzlich zeitgleich Etklärungsinformationen ausgegeben werden, die die jeweilige aktivierte Funktionalität und/oder weltere Bedienmöglichkeiten erläutern.
**dadurch gekennzeichnet, dass** das Fahrzeugsystem (3, 3') in einem Anleitungsmodus betreibbar ist, in dem über erfasste Steuerungseingaben eine gewünschte Funktionalität mit mehrstufigern Bedlenvorgang auswählbar ist, die der Nutzer auslösen und/oder Bedienen möchte, und nach der Auswahl der gewünschten Funktionalität automatisch in den Assistenzmodus gewechselt wird, wobei von der Steuereinrichtung (5) nur Erklärungsinformationen ausgegeben werden, die den Nutzer anleiten, die gewünschte Funktionalität auszulösen und/oder zu bedienen, und gegebenenfalls zusätzlich diese gewünschte Funktionalität beschreiben.

2. Fahrzeugsystem (3, 3') nach Anspruch 1, **dadurch gekennzeichnet, dass** die Steuerungseinrichtung ein Vergleichsmodul umfasst, mit dem die Steuerungseingaben bei einem durch den Anleitungsmodus ausgelösten Assistenzmodus mit den vorgesehen Steuerungseingaben zum Auslösen und/oder Bedienen der gewünschten Funktionalität verglichen werden, und bei einer Abweichung und/oder Übereinstimmung eine Rückmeldung an den Nutzer ausgegeben wird.

3. Fahrzeugsystem (3, 3') nach einem der vorangehenden Ansprüche, **dadurch gekennzeichnet, dass** das Fahrzeugsystem (3, 3') in einem Bedienmoduls betreibbar ist, in dem Steuerungseingaben nur als Steuerungseingaben für ein Bedienen der bereitgestellten Funktionalitäten aufgefasst und ausgewertet werden und keine zusätzlichen Erklärungsinformationen ausgegeben werden.

4. Fahrzeugsystem (3, 3') nach einem der vorangehenden Ansprüche, **dadurch gekennzeichnet, dass** das Fahrzeugsystem (3, 3') in einem Erklärungsmodus betreibbar ist, in dem die Steuerungseingaben nur als Steuereingaben zum Abrufen von Erklärungsinformationen aufgefasst und ausgewertet werden.

5. Fahrzeugsystem (3, 3') nach einem der vorangehenden Ansprüche, **dadurch gekennzeichnet, dass** das Fahrzeugsystem (3, 3') eine Konfigurationseinheit besitzl, über die einer der Betriebsmodi festlegbar ist, in den das Fahrzeugsystem (3; 3') nach einer Inbetriebnahme wechselt.

6. Fahrzeugsystem (3, 3') nach einem der vorangehenden Ansprüche, **dadurch gekennzeichnet, dass** bei einem erstmaligen Wechsel nach einer Inbetriebnahme in den Anleitungsmodus und/oder den Assistenzmodus und/oder den Erklärungsmodus automatisch Erklärungsinformationen ausgeben werden, die das Ausgeben von Erklärungsinformationen und dessen Steuerung durch die Steuerungseingaben erläutert.

7. Fahrzeugsystem (3, 3'), nach einem der vorangehenden Ansprüche, **dadurch gekennzeichnet, dass** die mindestens eine Ausgabeeinrichtung ein Audiosystem (15) umfasst und das Ausgeben der Erklärungsinformationen im Assistenzmodus nur über eine Audiosystem erfolgt.

8. Fahrzeugsystem (3, 3') nach einem der vorangehenden Ansprüche, **dadurch gekennzeichnet, dass** die Erklärungsinformationen ausgebildet sind, eine künstliche animierte Person (45) bei der Ausgabe der Erklärungsinformationen darzustellen.

9. Verfahren zum Betreiben eines Fahrzeugsystems eines Kraftfahrzeugs (1), umfassend die Schritte
Erfassen oder Empfangen von Steuerungseingaben,
Auswerten der Steuerungseingaben und Steuern und Bereitstellen der Funktionalitäten des Fahrzeugsystems (3, 3') gemäß der Steuerungseingaben,
wobei das Fahrzeugsystem (3, 3') in einem Assistenzmodus betreibbar ist, in dem die Steuerungseingaben zusätzlich zeitgleich für eine Bereitstellung von Erklärungsinformationen ausgewertet werden, die die Funktionalitäten und/oder eine weitere Bedienung des Fahrzeugsystems (3, 3') erläutern, und entsprechend der Auswertung aus einem Speichermedium (7) Erklärungsinformationen zu den bereitgestellten Funktionalitäten und/oder weitere (aktuellen) Bedienmöglichkeiten abgerufen werden und an den Nutzer oder mehrere Nutzer ausgegeben werden, **dadurch gekennzeichnet, dass** das Fahrzeugsystem (3, 3') in einem Anleitungsmodus betreibbar ist, in dem über erfasste Steuerungseingaben eine gewünschte Funktionalität mit mehrstufigem Bedienvorgang ausgewählt wird, die der Nutzer auslösen und oder Bedienen möchte, und nach der Auswahl der gewünschten Funktionalität automatisch in den Assistenzmodus gewechselt wird, wobei von der Steuereinrichtung (5) nur Erklärungsinformationen ausgegeben werden, die den Nutzer anleiten, die gewünschte Funktionalität auszulösen und/oder zu bedienen, und gegebenenfalls zusätzlich diese gewünschte Funktionalität beschreiben.

10. Verfahren nach Anspruch 9 **dadurch gekennzeichnet, dass** in dem durch den Anleitungsmodus ausgelösten Assistenzmodus die Steuerungseingaben mit den vorgesehen Steuerungseingaben zum Auslösen und/oder Bedienen der gewünschten Funktionalität verglichen werden, und bei einer Abweichung und/oder Übereinstimmung eine Rückmeldung an den Nutzer ausgegeben wird.

11. Verfahren nach einem der Ansprüche 9 oder 10, **dadurch gekennzeichnet, dass** das Fahrzeugsytem (3, 3') in einem Bedienmodus betreibbar ist, in dem Nutzereingaben nur als Steuereingaben aufgefasst und ausgewertet werden und keine zusätzlichen Erklärungsinformationen ausgegeben werden.

12. Verfahren nach einem der Ansprüche 9 bis 11, **dadurch gekennzeichnet, dass** das Fahrzeugsystem (3, 3') in einem Erklärungsmodus betreibbar ist, in dem die Nutzereingaben nur als Steuereingaben zum Abrufen von Erklärungsinformationen aufgefasst und ausgewertet werden.

13. Verlahren nach einem der Ansprüche 9 bis 12, **dadurch gekennzeichnet, dass** bei einem erstmaligen Wechsel nach einer Inbetriebnahme in den Anleitungsmodus und/oder den Assistenzmodus und/oder den Erklärungsmodus automatisch Erklärungsinformationen ausgeben werden, die das Ausgeben von Erklärungsinformationen und dessen Steuerung durch die Steuerungseingaben erläutert.

14. Verfahren nach einem der Ansprüche 9 bis 13, **dadurch gekennzeichnet, dass** Steuerungseingaben erfasst werden, über die einer der Betriebsmodi festgelegt wird, in den das Fahrzeugsystem (3; 3') nach einer Inbetriebnahme wechselt.

15. Verfahren nach einem der Ansprüche 9 bis 14, **dadurch gekennzeichnet, dass** die Erklärungsinformationen unter Verwendung einer animierten künstlichen Person (45) ausgegeben werden.

## Claims

1. Vehicle system (3, 3') for a motor vehicle (1) which provides functionalities in the motor vehicle (1) under the control of control inputs, comprising an interface (9) for capturing the control inputs and outputting information and a control device (5) for controlling the functionalities on the basis of the captured control inputs,
wherein
the control device (5) has a storage medium (7) linked to it which stores explanatory information which explains the functionalities and/or operator control, wherein the control device (5) is designed to retrieve explanatory information from the storage medium (7) and to output it via the interface (9) as part of the information, wherein the vehicle system (3, 3') can be operated in an assistance mode in which the user inputs are interpreted and evaluated as control inputs for the functionalities and additionally, at the same time, explanatory information is output which explains the respective activated functionality and/or further operator control options, **characterized in that** the vehicle system (3, 3') can be operated in an instruction mode in which captured control inputs can be used to select a desired functionality with a multistage operator control process, which functionality the user wishes to initiate and/or control, and the selection of the desired functionality is automatically followed by a change to the assistance mode, wherein the control device (5) outputs only explanatory information which instructs the user to initiate and/or control the desired functionality, and possibly additionally describes this desired functionality.

2. Vehicle system (3, 3') according to Claim 1, **characterized in that** the control device comprises a comparison module which is used to compare the control inputs in an assistance mode, which is initiated by the instruction mode, with the provided control inputs for initiating and/or controlling the desired functionality, and a discrepancy and/or match prompts the output of an acknowledgement to the user.

3. Vehicle system (3, 3') according to either of the preceding claims, **characterized in that** the vehicle system (3, 3') can be operated in an operator control mode in which control inputs are interpreted and evaluated only as control inputs for operator control of the provided functionalities and no additional explanatory information is output.

4. Vehicle system (3, 3') according to one of the preceding claims, **characterized in that** the vehicle system (3, 3') can be operated in an explanatory mode in which the control inputs are interpreted and evaluated only as control inputs for retrieving explanatory information.

5. Vehicle system (3, 3') according to one of the preceding claims, **characterized in that** the vehicle system (3, 3') has a configuration unit which can be used to stipulate one of the modes of operation to which the vehicle system (3; 3') changes following a startup.

6. Vehicle system (3, 3') according to one of the preceding claims, **characterized in that** a first-time change, following a startup, to the instruction mode and/or the assistance mode and/or the explanatory mode automatically prompts the output of explanatory information which explains the output of explanatory information and the control thereof by the control inputs.

7. Vehicle system (3, 3') according to one of the preceding claims, **characterized in that** the at least one output device comprises an audio system (15) and the explanatory information is output in the assistance mode only via an audio system.

8. Vehicle system (3, 3') according to one of the preceding claims, **characterized in that** the explanatory information is designed to present an artificial animated person (45) when the explanatory information is output.

9. Method for operating a vehicle system in a motor vehicle (1), comprising the steps of
capturing or receiving control inputs,
evaluating the control inputs and controlling and providing the functionalities of the vehicle system (3, 3') on the basis of the control inputs,
wherein the vehicle system (3, 3') can be operated in an assistance mode in which the control inputs are additionally, at the same time, evaluated for providing explanatory information which explains the functionalities and/or further operator control of the vehicle system (3, 3'), and the evaluation is taken as a basis for retrieving explanatory information for the provided functionalities and/or further (current) operator control options from a storage medium (7) and outputting it/them to the user or to a plurality of users, **characterized in that** the vehicle system (3, 3') can be operated in an instruction mode in which captured control inputs are used to select a desired functionality with a multistage operator control process, which functionality the user wishes to initiate and/or control, and the selection of the desired functionality is automatically followed by a change to the assistance mode, wherein the control device (5) outputs only explanatory information which instructs the user to initiate and/or control the desired functionality, and possibly additionally describes this desired functionality.

10. Method according to Claim 9, **characterized in that** the assistance mode initiated by the instruction mode involves the control inputs being compared with the provided control inputs for initiating and/or controlling the desired functionality, and a discrepancy and/or match prompts the output of an acknowledgement to the user.

11. Method according to either of Claims 9 and 10, **characterized in that** the vehicle system (3, 3') can be operated in an operator control mode in which user inputs are interpreted and evaluated only as control inputs and no additional explanatory information is output.

12. Method according to one of Claims 9 to 11, **characterized in that** the vehicle system (3, 3') can be operated in an explanatory mode in which the user inputs are interpreted and evaluated only as control inputs for retrieving explanatory information.

13. Method according to one of Claims 9 to 12, **characterized in that** a first-time change, following a startup, to the instruction mode and/or the assistance mode and/or the explanatory mode automatically prompts the output of explanatory information which explains the output of explanatory information and the control thereof by the control inputs.

14. Method according to one of Claims 9 to 13, **characterized in that** control inputs are captured which are used to stipulate one of the modes of operation to which the vehicle system (3; 3') changes following a startup.

15. Method according to one of Claims 9 to 14, **characterized in that** the explanatory information is output using an animated artificial person (45).

## Revendications

1. Système de véhicule (3, 3') pour un véhicule automobile (1), ledit système mettant à disposition de façon commandée, par le biais d'entrées de commande, des fonctionnalités dans le véhicule automobile (1), comprenant une interface (9) de détection des entrées de commande et d'affichage des informations et un dispositif de commande (5) pour commander les fonctionnalités en fonction des entrées de commande détectées ;
un support de mémoire (7) étant rattaché au dispositif de commande (5) et mémorisant des informations d'explication expliquant les fonctionnalités et/ou le mode de fonctionnement, le dispositif de commande (5) étant réalisé pour appeler des informations d'explication dans le support de mémoire (7) et pour sortir par parties les informations par le biais de l'interface (9), le système de véhicule (3, 3') pouvant être utilisé dans un mode d'assistance dans lequel les entrées de l'utilisateur sont interprétées comme des entrées de commande pour les fonctionnalités et sont analysées et accompagnées en outre simultanément d'informations d'explication expliquant la fonctionnalité respectivement activée et/ou les possibilités d'utilisation supplémentaires ;
**caractérisé en ce que** le système de véhicule (3, 3') peut être utilisé dans un mode d'instruction dans lequel, à réception d'entrées de commande détectées, une fonctionnalité souhaitée peut être sélectionnée avec un mode de commande à plusieurs niveaux que l'utilisateur souhaite déclencher et/ou utiliser et après sélection de la fonctionnalité souhaitée, est automatiquement basculé dans le mode d'assistance, le dispositif de commande (5) n'envoyant que des informations d'explication pouvant amener l'utilisateur à déclencher et/ou à utiliser la fonctionnalité souhaitée et décrivant en outre le cas échéant cette fonctionnalité souhaitée.

2. Système de véhicule (3, 3') selon la revendication 1, **caractérisé en ce que** le dispositif de commande comprend un module de comparaison à l'aide duquel les entrées de commande sont comparées, dans un mode d'assistance déclenché par le mode d'instruction, aux entrées de commande prévues pour déclencher et/ou utiliser la fonctionnalité souhaitée et **en ce qu'**un message est envoyé à l'utilisateur en cas d'écart et/ou de correspondance des données.

3. Système de véhicule (3, 3') selon l'une quelconque des revendications précédentes, **caractérisé en ce que** le système de véhicule (3, 3') peut être utilisé dans un mode de commande dans lequel les entrées de commande ne sont traitées et analysées que comme des entrées de commande permettant de commander les fonctionnalités mises à disposition et ne sont accompagnées d'aucune information supplémentaire.

4. Système de véhicule (3, 3') selon l'une quelconque des revendications précédentes, **caractérisé en ce que** le système de véhicule (3, 3') peut être utilisé dans un mode d'explication dans lequel les entrées de commande ne sont traitées et analysées que comme des entrées de commande permettant d'appeler des informations d'explication.

5. Système de véhicule (3, 3') selon l'une quelconque des revendications précédentes, **caractérisé en ce que** le système de véhicule (3, 3') possède une unité de configuration permettant de déterminer un des modes de fonctionnement dans lequel le système de véhicule (3 ; 3') bascule après la mise en service.

6. Système de véhicule (3, 3') selon l'une quelconque des revendications précédentes, **caractérisé en ce que** lors d'un premier changement après une mise en service dans le mode d'instruction et/ou le mode d'assistance et/ou le mode d'explication, des informations d'explication sont automatiquement transmises expliquant la transmission des informations d'explication et comment les commander au travers des entrées de commande.

7. Système de véhicule (3, 3'), selon l'une quelconque des revendications précédentes, **caractérisé en ce que** l'au moins un dispositif de sortie comprend un système audio (15) et que la sortie des informations d'explication n'est réalisée que par le biais d'un système audio dans le mode d'assistance.

8. Système de véhicule (3, 3') selon l'une quelconque des revendications précédentes, **caractérisé en ce que** les informations d'explication sont conçues pour représenter une personne animée (45) artificielle lors de la sortie des informations d'explication.

9. Procédé d'utilisation d'un système de véhicule de véhicule automobile (1), comprenant les étapes de :
détection ou réception d'entrées de commande ;
analyse des entrées de commande et commande et mise à disposition des fonctionnalités du système de véhicule (3, 3') en fonction des entrées de commande ;
le système de véhicule (3, 3') pouvant être utilisé dans un mode d'assistance dans lequel les entrées de commande sont analysées afin de mettre en outre simultanément à disposition des informations d'explication expliquant les fonctionnalités et/ou les possibilités d'utilisation supplémentaires du système de véhicule (3, 3') et des informations d'explication des fonctionnalités mises à disposition et/ou des possibilités de commande (actuelles) supplémentaires pouvant être appelées de façon correspondante à partir du support de mémoire (7) en fonction de l'analyse et être transmises à l'utilisateur ou à plusieurs utilisateurs ;
**caractérisé en ce que** le système de véhicule (3, 3') peut être utilisé dans un mode d'instruction dans lequel, à réception d'entrées de commande détectées, une fonctionnalité souhaitée peut être sélectionnée avec un mode de commande à plusieurs niveaux que l'utilisateur souhaite déclencher et/ou utiliser et après sélection de la fonctionnalité souhaitée, est automatiquement basculé dans le mode d'assistance, le dispositif de commande (5) n'envoyant que des informations d'explication pouvant amener l'utilisateur à déclencher et/ou à utiliser la fonctionnalité souhaitée et décrivant en outre le cas échéant cette fonctionnalité souhaitée.

10. Procédé selon la revendication 9, **caractérisé en ce que** dans le mode d'assistance déclenché par le mode d'instruction, les entrées de commande sont comparées aux entrées de commande prévues pour déclencher et/ou commander la fonctionnalité souhaitée et **en ce qu'**un message est envoyé à l'utilisateur en cas d'écart et/ou de correspondance des données.

11. Procédé selon l'une quelconque des revendications 9 ou 10, **caractérisé en ce que** le système de véhicule (3, 3') peut être utilisé dans un mode de commande dans lequel les entrées d'utilisateur ne sont traitées et analysées que comme des entrées de commande et ne sont accompagnées d'aucune information d'explication supplémentaire.

12. Procédé selon l'une quelconque des revendications 9 à 11, **caractérisé en ce que** le système de véhicule (3, 3') peut être utilisé dans un mode d'explication dans lequel les entrées d'utilisateur ne sont traitées et analysées que comme des entrées de commande permettant d'appeler des informations d'explication.

13. Procédé selon l'une quelconque des revendications 9 à 12, **caractérisé en ce que** lors d'un premier changement après une mise en service dans le mode d'instruction et/ou le mode d'assistance et/ou le mode d'explication, des informations d'explication sont automatiquement transmises expliquant la transmission des informations d'explication et comment les commander au travers des entrées de commande.

14. Procédé selon l'une quelconque des revendications 9 à 13, **caractérisé par** une détection des entrées de commande permettant de déterminer un des modes de fonctionnement dans lequel le système de véhicule (3 ; 3') bascule après une mise en exploitation.

15. Procédé selon l'une quelconque des revendications 9 à 14, **caractérisé en ce que** les informations d'explication sont conçues pour être représentées par le biais d'une personne animée (45) artificielle.
